(19) Europäisches Patentamt / European Patent Office / Office européen des brevets

(11) **EP 3 032 875 A1**

(12) **EUROPEAN PATENT APPLICATION**

(43) Date of publication:
**15.06.2016 Bulletin 2016/24**

(51) Int Cl.:
**H04W 28/18** (2009.01)

(21) Application number: **14306970.6**

(22) Date of filing: **08.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventor: **Gacanin, Harris**
**2018 Antwerp (BE)**

(74) Representative: **D'Halleweyn, Nele Veerle Trees Gertrudis et al**
**Arnold & Siedsma**
**Bezuidenhoutseweg 57**
**2594 AC The Hague (NL)**

Remarks:
Claims filed after the date of filing of the application (Rule 68(4) EPC).

(54) **Dynamic service quality management in a heterogeneous wireless network**

(57) A method for managing a plurality of over-the-top service requests from a number of user devices in a heterogeneous wireless network (known as HWN) connected to the Internet via a multi-domain access network. Each service request is associated with service layer quality level requirements and/or access layer network resource requirements. The method comprises: determining a network resource utilization for said access network; and at least one of the following: determining a service layer configuration parameter for each service request, based on said service requests and on said network resource utilization as well as configuring the service layer according to said service layer configuration parameters for said service requests; and determining an access layer configuration parameter for each of said service requests, based on said service requests and on said network resource utilization as well as configuring the access layer according to said access layer configuration parameters for the service requests.

FIG. 1B

EP 3 032 875 A1

**Description**

Field of the Invention

The field of the invention relates to dynamic management of service requests. Particular embodiments relate to a method for managing a plurality of over-the-top service requests and to a control apparatus for managing a plurality of over-the-top service requests.

Background

Several standards (3GPP - 3rd Generation Partnership Project, IEEE - Institute of Electrical and Electronics Engineers) have defined wireless technologies (mobile, WiFi) in order to enable the broadband mobile communications that are required for in-house services. However, the current view on the home network is very complex, because different access domains are available for both mobile and fixed user devices (for mobile, e.g., 3G/4G macrocells and femtocells; for WiFi, e.g., mobile access, but also fixed access: twisted-pairs, coax, power line cables). Since home network broadband applications are becoming very popular and may be provided by more than one service and/or network operator, it is expected that advanced management for mobile home networks and user devices will become more demanding.

The available network resources are limited by the network connectivity and an increasing number of user devices in the home network. User devices such as smartphones typically have multiple interfaces: WiFi, 3G, 4G, Bluetooth, etc. The users of the user devices are requesting more bandwidth-hungry network services such as video conferencing, gaming, online movie/music streaming, etc. Heterogeneous wireless networks (HWNs) contain different domains/layers such as the macro (served by a larger base station: 3G or 4G for example) layer, the small cell or femto layer (served by a small base station for outdoor coverage and 3G/4G integrated residential gateways for indoor coverage) and the service layer (containing the user devices across different network technology layers).

In such complex network deployments, where wireless/mobile network resources are shared among different users and/or user devices (even for indoor closed-group femtocell users), the network reliability and user device quality of service (QoS) suffer. The requested services may exceed the available HWN bandwidth of the particular user when one or more user devices try to access multimedia content in the cloud at the same time. This will impact all users and limit the individual QoS per user device. The 'always on' and 'homogeneous' user experience may not be possible in HWNs (or it may be very difficult to be achieved) when rich multimedia content is requested across different network layers. Due to HWN deployment, it is very difficult to control priority and fairness of users and/or user devices across all layers and manage the use of their applications, since the network capacity limitations for user devices are different in the macro and femto layers.

Summary

It is an object of embodiments of the present invention to provide efficient bandwidth utilization across different services in a multi-domain access network.

According to a first aspect of the invention, there is provided a method for managing a plurality of over-the-top service requests from a number of user devices in a heterogeneous wireless network (known as HWN) connected to the Internet via a multi-domain access network. The multi-domain access network represents an access layer, and the service requests operate on a service layer, which is a middleware providing services to higher-layer applications. Each service request is associated with at least one of: service layer quality level requirements; and access layer network resource requirements.

The method comprises determining a network resource utilization for said multi-domain access network.

The method comprises determining a service layer configuration parameter for each of said service requests, based on said plurality of service requests and on said network resource utilization; and configuring the service layer of said HWN according to said service layer configuration parameters for said plurality of service requests.

Additionally or alternatively to said step of determining a service layer configuration, the method comprises determining an access layer configuration parameter for each of said service requests, based on said plurality of service requests and on said network resource utilization; and configuring the access layer of said HWN according to said access layer configuration parameters for said plurality of service requests.

In this manner, by dynamically managing the OTT service requests, embodiments of the method provide efficient bandwidth utilization across different services in the multi-domain access network, which is a home network. More in particular, by taking into account multiple (preferably all) service requests in a combined manner, embodiments of the method dynamically manage the OTT service requests, so as to improve network resource use efficiency. Configuration (or, more generally, some or all communication) may take place through a network management protocol, such as the well-known TR-069 protocol, or the OMA-DM (Open Mobile Alliance - Device Management) protocol over 3G/4G/WiFi access.

Currently known solutions are not as good, because an individual service is not aware of the other services within the same HWN home network.

Currently known solutions are also not as good, because the gateway does not have information about pre-determined QoS ranges per application that are acceptable to users which would allow it to adjust the overall application experience.

The method is especially applicable when throughput requirements posed on said multi-domain network by said service requests exceed a throughput capacity of said access network.

In an embodiment, at least one of said service layer configuration parameter and said access layer configuration parameter is determined for each service request based on at least one of said service layer quality level requirements and said access layer network resource requirements of each service request of said plurality of service requests.

Alternatively or additionally, at least one of said service layer configuration parameter and said access layer configuration parameter is determined for each service request based on at least one of the following: a pre-determined range of service layer quality level settings for the service corresponding with the service request; and priority information about at least one of the service and the device corresponding with the service request. Preferably, said priority information is time-based.

In this manner, by taking into account pre-determined ranges of quality levels (*i.e.,* QoS ranges) for service requests and /or priority information that preferably depends on time (*e.g.*, which devices have which priority on which times of day, or which services must be deprioritized when), the method allows to manage the service requests more fairly (*i.e.*, within what they should have and want to have).

Users are able to specify (and thereby pre-determine) acceptable QoS ranges per application using one or more of the above mentioned network management protocols.

In another embodiment, said configuring of the service layer of said HWN comprises configuring each of said user devices via a service application programming interface to use service layer quality level settings according to its respective service layer configuration parameter. Additionally or alternatively, said configuring of the access layer of said HWN comprises configuring each of said user devices via a network application programming interface to use access layer network resource settings according to its respective access layer configuration parameter.

In this manner, the method allows to configure the service layer and/or the access layer via a well-defined interface. The interface may be contacted via a remote application management network protocol, such as TR-069 or OMA-DM (Open Mobile Alliance - Device Management).

In this manner, the method also allows to set the quality level setting for a service request (*e.g.,* by requesting a lower quality video stream), and/or to set the allocated network resources of the access network (*e.g.,* by accessing the Internet via another access domain, such as the 4G domain instead of the originally requested WiFi domain).

In yet another embodiment, said service layer configuration parameter and said access layer configuration parameter are determined by performing an optimization process based on said plurality of service requests in order to determine said service layer configuration parameter and said access layer configuration parameter such that network resource use efficiency for said multi-domain access network is improved while taking into account each service request of said plurality of service requests.

In this manner, the method allows to optimize the determining, and thus to quickly find sufficiently qualitative solutions for the service layer configuration parameter and/or for the access layer configuration parameter. It is noted that the notion of 'optimizing' is used in the context of this specification in an engineering sense, in that a problem is solved by selection of a best element (with regard to some criteria) from some set of available alternatives - an optimization may find or may not find the best or even a good solution.

In an embodiment, the method comprises, in order to determine whether or not throughput requirements posed on said multi-domain access network by said service requests exceed a throughput capacity of said multi-domain access network, the following steps: determining a throughput capacity for said multi-domain access network; scanning each of said user devices in order to determine its available interfaces, its maximum bandwidths corresponding to each of said available interfaces, its available services, and service requirements for each of said available services; determining collective throughput requirements of said service requests based on said scanned devices' available interfaces, maximum bandwidths, available services and service requirements; and comparing said collective throughput requirements to said determined throughput capacity.

In this manner, the method may be triggered to dynamically manage the service requests when a need therefor arises; if the required throughput of the multi-domain access network exceed the throughput that it can muster, some or all of the services will likely suffer from degraded quality of experience.

In another embodiment, the optimization process is performed by comparing device settings across multiple devices using a comparator.

In this manner, the method allows to optimize across multiple devices of said user devices, such that quality of service requirements for multiple competing users of said user devices may be better met.

In yet another embodiment, the method comprises detecting whether a new user device is activated in said HWN. When it is detected that a new user device is activated, the method comprises configuring said new user device in accordance with configurations of said user devices so as to avoid interference between said new user device and said user devices.

In this manner, adding a new user device to the HWN does not endanger the management of service requests of the existing user devices, since the new user device is configured to 'play well' with the existing user devices, for instance by selecting a convenient access domain, idle time slots, service layer quality level settings etc.

In a further developed embodiment, the method comprises sending a notification to an operator management system of said access network based on the configuring of the service layer and/or the access layer, each time said configuring is performed.

In this manner, the operator can be made aware of the conditions of the HWN deployment and can react accordingly, for instance by prioritizing or deprioritizing certain traffic or by increasing or decreasing the available bandwidth for certain connections.

According to a second aspect of the invention, there is provided a control apparatus for managing a plurality of over-the-top service requests from a number of user devices in a heterogeneous wireless network (known as HWN) connected to the Internet via a multi-domain access network. The multi-domain access network represents an access layer, and the service requests operate on a service layer.

Each service request is associated with at least one of: service layer quality level requirements; and access layer network resource requirements.

The control apparatus comprises a utilization analyzer, and at least one of: a service layer controller; and an access layer controller.

The utilization analyzer is configured for determining an network resource utilization for said multi-domain access network.

The service layer controller is configured for: determining a service layer configuration parameter for each of said service requests, based on said plurality of service requests and on said network resource utilization; and configuring the service layer of said HWN according to said service layer configuration parameters for said plurality of service requests.

The access layer controller is configured for: determining an access layer configuration parameter for each of said service requests, based on said plurality of service requests and on said network resource utilization; and configuring the access layer of said HWN according to said access layer configuration parameters for said plurality of service requests.

The skilled person will understand that the hereinabove described considerations and advantages for the embodiments of the method also apply for embodiments of the control apparatus, *mutatis mutandis*.

In an embodiment, at least one of said service layer controller and said access layer controller is configured for determining respectively said service layer configuration parameter and said access layer configuration parameter for each service request based on at least one of said service layer quality level requirements and said access layer network resource requirements of each service request of said plurality of service requests. Additionally or alternatively, at least one of said service layer controller and said access layer controller is configured for determining respectively said service layer configuration parameter and said access layer configuration parameter for each service request based on at least one of the following: a pre-determined range of service layer quality level settings for the service corresponding with the service request; and priority information about at least one of the service and the device corresponding with the service request. Said priority information is preferably time-based.

In another embodiment, said service layer controller is configured for configuring said service layer of said HWN by configuring each of said user devices via a service application programming interface to use service layer quality level settings according to its respective service layer configuration parameter. Additionally or alternatively, said access layer controller is configured for configuring said access layer of said HWN by configuring each of said user devices via a network application programming interface to use access layer network resource settings according to its respective access layer configuration parameter.

In yet another embodiment, at least one of said service layer controller and said access layer controller comprises an optimizer configured for performing an optimization process based on said plurality of service requests in order to determine respectively said service layer configuration parameter and said access layer configuration parameter such that network resource use efficiency for said multi-domain access network is improved while taking into account each service request of said plurality of service requests.

In an embodiment, said control apparatus comprises a throughput analyzer configured to determine whether or not throughput requirements posed on said multi-domain access network by said service requests exceed a throughput capacity of said multi-domain access network. Said throughput analyzer comprises a throughput capacity calculator, a device scanner, a throughput requirements calculator and a comparator.

Said throughput capacity calculator is configured for determining a throughput capacity for said multi-domain access network.

Said device scanner is configured for scanning each of said user devices in order to determine its available interfaces, its maximum bandwidths corresponding to each of said available interfaces, its available services, and service requirements for each of said available services.

Said throughput requirements calculator is configured for determining collective throughput requirements of said service requests based on said scanned devices' available interfaces, maximum bandwidths, available services and service requirements.

Said comparator is configured for comparing said collective throughput requirements to said determined throughput capacity.

In another embodiment, said optimizer comprises a comparator configured for comparing device settings across multiple devices.

In yet another embodiment, said control apparatus comprises a device activation detector configured for detecting whether a new user device is activated in said HWN. At least one of said service layer controller and said access layer controller is configured for, depending on the output of said device activation detector, configuring said new user device in accordance with configurations of said user devices so as to avoid interference between said new user device and said user devices.

In a further developed embodiment, said control apparatus comprises a notification unit configured for sending a notification to an operator management system of said access network based on the configuring of the service layer and/or the access layer, each time said configuring is performed.

According to a third aspect of the invention, there is provided a computer program product comprising computer-executable instructions for performing a method when the program is run on a computer, the method comprising the steps *(i.e.,* all of the steps) of any one of the method embodiments described hereinabove.

The skilled person will understand that the hereinabove described considerations and advantages for the embodiments of the method also apply for embodiments of the computer program product, *mutatis mutandis.*

Brief Description of the Figures

The accompanying drawings are used to illustrate presently preferred non-limiting exemplary embodiments according to the present invention. The above and other advantages of the features of embodiments according to the invention and objects of the invention will become more apparent and the invention will be better understood from the following detailed description when read in conjunction with the accompanying drawings, in which:

Figures 1A-D illustrate an example scenario for performing embodiments of the method according to the present invention;
Figures 2A-B illustrate two embodiments of the method according to the present invention;
Figures 3A-B illustrate two embodiments of the control apparatus according to the present invention;
Figure 4 illustrates a graphical solution to an exemplary optimization problem; and
Figure 5 illustrates an example interface connection for a control apparatus according to the present invention.

Description of Embodiments

Consider the case where network operators are entering the application space and start to compete with over-the-top (OTT) services. An example OTT service that is currently very popular is video on demand (VoD).

In the context of the present specification, an OTT service request is a service request requesting delivery of OTT-type multimedia services from a content network (like the Internet) comprising a number of servers storing multimedia content, said multimedia services to be delivered via an access network connecting said HWN and said content network across a plurality of network access domains, each of said network access domains having a throughput capacity.

User devices include wireless user devices, mobile or fixed, typically having at least one interface for connecting to a respective network access domain of said multi-domain access network (and typically having multiple interfaces), situated in the HWN; examples include: HDTV, iPad, PC, TV, laptop, smartphone, gaming console, etc.

Applications are programs, runnable on the user devices, that can relay network content to the end-users.

Service requests are requests made for transmission and/or reception of OTT services from a content network like the Internet, via the multi-domain access network.

Multimedia services include such services as Home Office, YouTube, Skype, etc. Over-the-top service, or over-the-top content (OTT) historically refers to delivery of audio, video, and other media over the Internet without a multiple-system operator *(i.e.,* an operator of multiple cable or direct-broadcast satellite television systems) being involved in the control or distribution of the content - in the present specification, however, only the user-centric view of 'OTT-type content' is meant, regardless of whether or not a multiple-system operator is involved in the control or distribution of that content.

A HWN is a heterogeneous wireless network, comprising different access domains (or network layers) such as the macro layer (served by large base stations: 3G, 4G), the small cell or femto layer (served by small base stations for outdoor coverage, and by 3G/4G integrated residential gateways for indoor coverage).

An multi-domain access network is a network connecting the HWN and the content network; typically with a limited throughput capacity due to bandwidth-constraints.

Different OTT services and their corresponding applications have different quality of service (QoS) requirements. For example, YouTube allows users to manually change the resolution between 240p and 360p and adjust the quality level or QoS depending on the available bandwidth in the access network and home network itself. The operator HWNs (combination of 3G/4G/femtocells) are envisaged to provide high bandwidth/throughput to access the multimedia Internet content.

There are currently three options to manage QoS requirements, that are independent (management-wise) from any network element (base station):

1) by requesting a specific QoS setting at the moment the application is in use;
2) dynamic QoS settings based on given network domain conditions; and
3) by user-defined priority settings per application in the operator's network service gateway (S-GW).

However, these solutions have at least the disadvantage that an individual user device (and by consequence, an individual service) is not aware of the other requests made within the HWN. On the other hand, the operator's service gateway, which is aware of the multiple service requests in the HWN, does not have information about acceptable QoS ranges per application which would allow it to adjust the overall user experience with respect to both network resources and services. Incidentally, this consideration benefits from net neutrality.

Thus, dynamic management of QoS across different access domains or network layers (macro, femto) and services has not yet been made possible.

Embodiments of the present invention are especially applicable to HWNs, but the skilled person will understand that embodiments of the invention may be applied to other types of networks wherein multiple requests compete for network resources of a multi-domain access network, and in particular when the requests have overly large bandwidth requirements in comparison with the available bandwidth for the particular single or multiple user device(s).

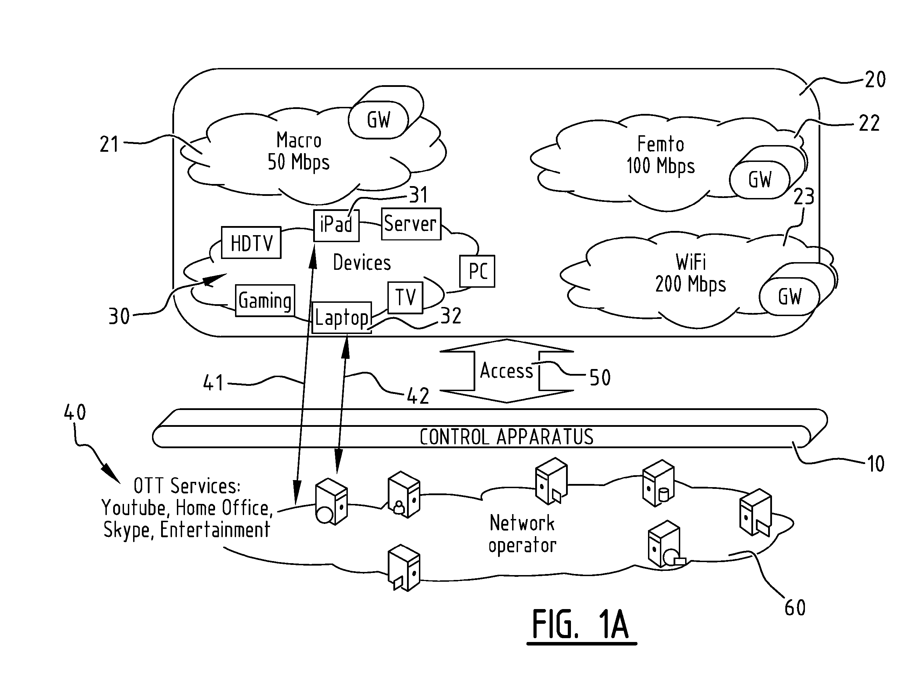

Figures 1A-D illustrate an example scenario for performing embodiments of the method according to the present invention.

Figure 1A illustrates a first part of the example scenario. In this scenario user devices 30 in multiple locations and/or in multiple access domains 21-23 wish to access application content 40 at media servers located in the Internet domain 60, through a multi-domain access network 50. Three access domains 21-23 are shown here: home femto (3G/4G) 22, residential WiFi (802.11) 23 and mobile macro (3G/4G) 21. The respective access domains 21-23 are bandwidth-limited to, for example, respectively 100 Mbps, 200 Mbps and 50 Mbps, and can therefore only accommodate a given throughput. Each access domain also has a gateway, or shares an integrated gateway with another access domain. The multi-domain access network 50 is itself also bandwidth-limited, *e.g.* to 100 Mbps (or typically even about 20-50 Mbps for DSL or shared fiber access). An embodiment of a control apparatus 10 is shown, to perform the method embodiment. The control apparatus 10 is connected to the access network 50. The application content 40 or OTT services 40 comprise(s) for example such applications / services as online video channels, Home Office, online video chat and other information and/or entertainment services. The user devices 40 comprise for example an HDTV, a table computer such as an iPad 31, a Server, a PC, a TV, a laptop 32 and a gaming console. In the present example scenario, the iPad 31 and the laptop 32 respectively output service request 41 for 40 Mbps access and service request 42 for 80 Mbps access, for accessing some of the OTT services 40 (*e.g.,* respectively for accessing the Home Office and YouTube services). The service requests 41 and 42 may compete for network resources. The service requests 41 and 42 pass through the access network 50, such that the control apparatus 10 may perform the method embodiment on these service requests 41 and 42. The control apparatus 10 can be implemented as an API (application programming interface) with respect to mobile/wireless home network access (either at the residential gateway or independently in the operator network 60). Thus, this point can be seen as a proxy between in-house user devices 30 and the Internet 60 to balance the load adaptively (maintain the QoS requirements between different home network user devices 30 and multimedia application content 40).

Since the collective throughput requirements posed by these two service requests 41 and 42 exceed the throughput capacity of the access network 50, the method is especially applicable.

The control apparatus 10 determines the utilization of the network resources of the access layer, *i.e.,* the conditions for throughput of the multi-domain access network 50, such as which resources are in use, which resources are available, which resources are allocated, etc. Some network resources may for instance already be tied up, or there may be pending requests. By determining the utilization, the control apparatus 10 can better determine how to allocate network resources of the multi-domain access network 50 to service requests.

The control apparatus 10 determines a service layer configuration parameter, for each of the service requests, based on the two service request 41 and 42 determined earlier, and on said utilization.

The control apparatus 10 also determines an access layer configuration parameter, for each of the service requests, based on the two service request 41 and 42 determined earlier, and on said utilization.

The service layer configuration parameter may pertain to a service layer quality level setting, for example a YouTube video streaming quality, or a color quality level for a remote desktop session, etc. These service layer quality level settings preferably are situated within a pre-determined range of service layer quality level settings that are acceptable for the corresponding service / application.

The access layer configuration parameter may pertain to an access layer network resource allocation, for example an allocated access domain, or an allocated access domain and corresponding bandwidth allocation, etc. These access layer network resource allocations preferably are determined such that the multiple service requests 41 and 42 that compete for network resources can co-exist efficiently.

It is noted that the control apparatus 10 can determine either or both of the configuration parameters based on the plurality of service requests 41 and 42, and therefore can take into account information about all of the other existing service requests that it is managing in order to adjust the overall user experience with respect to both network resources on the access layer and services on the service layer.

The control apparatus 10 can optionally determine a quality of service (QoS) parameter for each of the service requests 41 and 42, preferably as a function of the following: a pre-determined range of service layer quality settings for the corresponding service request (*e.g.*, the user may have indicated that the acceptable range of quality levels for YouTube should not drop below 480p quality), priority information (preferably time-based) about the corresponding service request (*e.g.*, an administrator of the multi-domain access network may have indicated that traffic from and/or to a given class of user devices and/or applications is to be prioritized or deprioritized during certain time windows, to improve the efficiency of use of expensive bandwidth), and/or access layer network resource requirements of the corresponding service request (*e.g.*, bandwidth requirements per domain and per device).

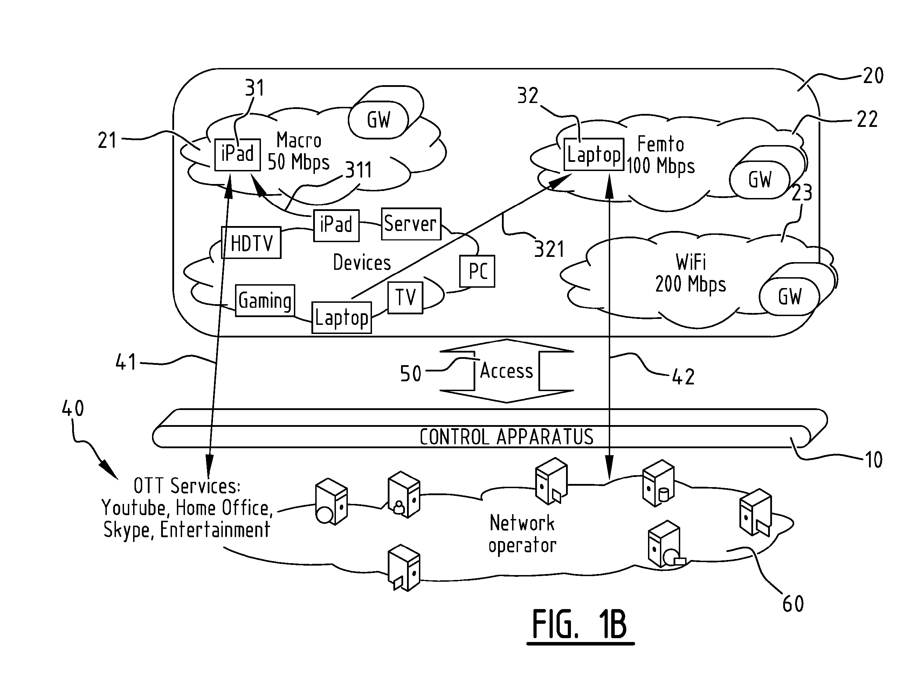

Figure 1B illustrates another part of the example scenario.

The service layer of the HWN 20 is configured according to the service layer configuration parameters. For example, by setting a device application setting such as the resolution for an online video channel like YouTube.

The access layer of the HWN 20 is configured according to the access layer configuration parameters. For example, by reconfiguring an access interface of a device to use WiFi instead of PLC (Power-line communication).

In other words, service request 41 from the iPad user device 31 is allocated 311 to connect to the Internet 60 via the macro access domain 21, whereas service request 42 from the laptop user device 42 is allocated 321 to connect to the Internet 60 via the femto access domain 22. Also, the service layer quality levels of the service requests 41 and 42 are adjusted according to the service layer configuration parameters.

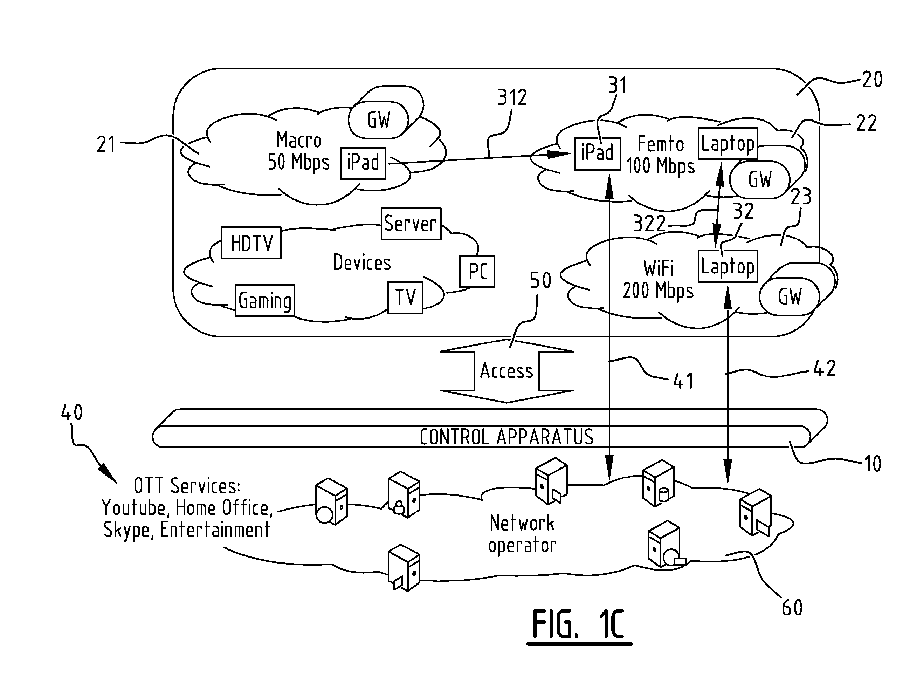

Figure 1C illustrates another part of the example scenario. In this part, it has been determined (*e.g.*, through an optimization process) that service request 41 from the iPad user device 31 should be allocated 312 to connect to the Internet 60 via the femto access domain 22, whereas service request 42 from the laptop user device 42 should be allocated 322 to connect to the Internet 60 via the WiFi access domain 23. Also, the service layer quality levels of the service requests 41 and 42 are adjusted according to the service layer configuration parameters. It will be appreciated that this allows to improve dynamic management of the service requests in the HWN 20.

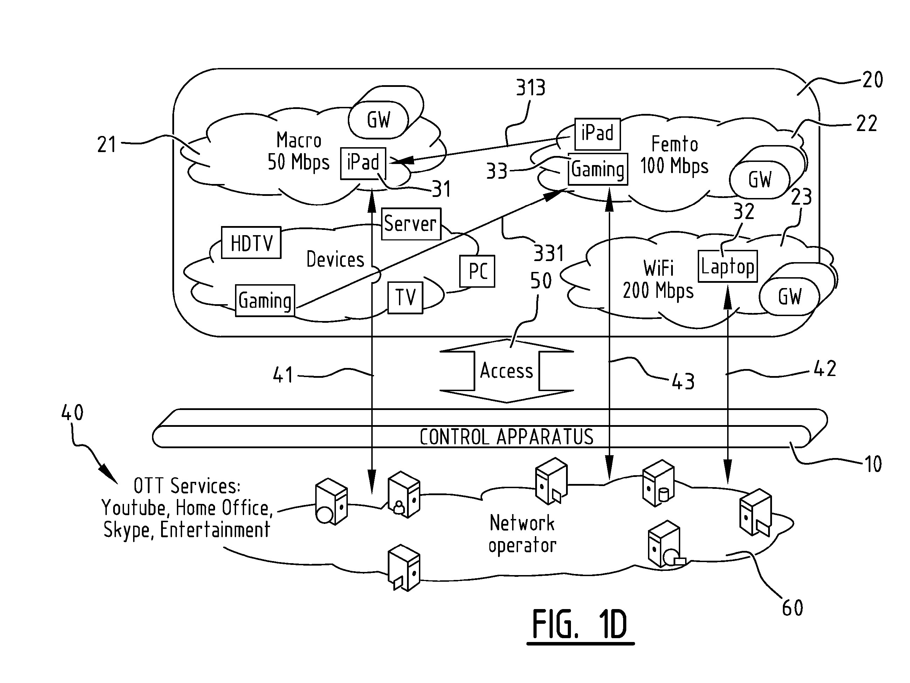

Figure 1D illustrates another part of the example scenario. A new user, namely a gaming console 33, has become activated and outputs a service request 43. In response, service request 31 from the iPad user device 32 is allocated 313 to connect to the Internet 60 via the macro access domain 21, and service request 43 from the gaming console user device 33 is allocated 331 to connect to the Internet via the femto access domain 22. Service request 42 from the laptop user device 32 is not allocated to another access domain in this example scenario. Also, the service layer quality levels of the service requests 41, 42 and 43 are adjusted according to the service layer configuration parameters. It will be appreciated that this allows to improve the management of the service requests in the HWN 20 when new user devices are activated.

Optionally, depending on different priorities etc., the adaptation may be different across different user devices 30 within the HWN 20. Based on the optionally defined QoS parameter, the control apparatus 10 adaptively manages bandwidth requirements of both devices 31 and 32 by using each service's API (*e.g.,* available in the cloud) and each device's API (*e.g.,* the device's physical interfaces) to adjust their requirements (the occupancy of the available access network bandwidth and service quality) with the available resources.

In this solution, the choice of quality level or QoS per service / application is no longer in dispute between OTT providers and network operators, but is in the hands of home network end-users. Optionally based on priorities and acceptable quality ranges for different applications set by the user the user device can dynamically adjust its requirements on both ends (*i.e.,* on the network access domain end and on the application/service end) between different APIs. Moreover, the user can specify acceptable QoS ranges per application that can be taken into account when determining the service layer configuration parameters and/or the access layer configuration parameters.

Note that a single gateway may be used for, say, femto and WiFi access (*i.e.,* an integrated gateway), since different devices 30 have different service requests that are classified by the control apparatus 10.

An example definition of the optional quality of service parameter may be the following, for each of the service requests of the user device(s):

$$QoS[device\_ID]=[Priority\ tables\ (date,\ hour),\ QoS\ per\ application\ (Mbps),\ Bandwidth\ (layer,\ access)].$$

The generic QoS parameter for each device is thus defined according to this example based on the following information: 1) priority tables, that may preferably be time-based, but may also be based on a classification of user devices or of users, or on a type of service, etc., 2) range of acceptable QoS (bandwidth) settings (*i.e.*, quality level settings) per application / service, and 3) bandwidth requirements per domain and device.

Based on the optional defined QoS parameter, the optimization problem is defined to include different parameters and configuration constraints. An example for mobile devices is codec setting at the service layer.

The access layer controller may be used to control the lower network layer protocol. On the other hand, the service layer controller may be used to control the service requests (*i.e.*, the higher layers). The access layer controller and the service layer controller may use a list of optional device QoS parameters as defined above and a network resource utilization, *i.e.*, a list of network service (resource) availability. An optimizer's 16 may then be configured to correlate among the service and network lists in such a way as to increase network resource efficiency while taking into consideration all OTT service requests.

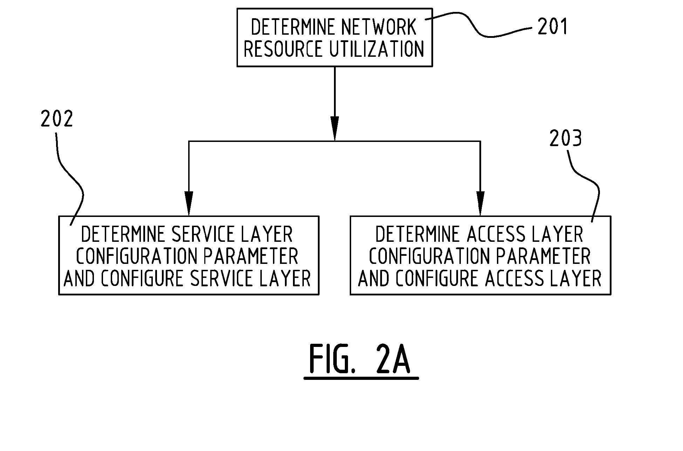

Figures 2A-B illustrate two embodiments of the method according to the present invention.

Figure 2A illustrates a first embodiment of the method according to the present invention. The method comprises the steps 201, as well as 202 and/or 203.

Step 201 represents determining a network resource utilization for said multi-domain access network.

Step 202 represents determining a service layer configuration parameter for each of said service requests, based on said plurality of service requests and on said network resource utilization; and configuring the service layer of said HWN according to said service layer configuration parameters for said plurality of service requests.

Step 203 represents determining an access layer configuration parameter for each of said service requests, based on said plurality of service requests and on said network resource utilization; and configuring the access layer of said HWN according to said access layer configuration parameters for said plurality of service requests.

It is to be understood that other embodiments of the method according to the present invention may use a different sequence of the listed steps. In particular, the step 202 may be performed without performing step 203, step 203 may be performed without performing step 202, step 202 may be performed before performing step 203, and step 203 may be performed before performing step 202.

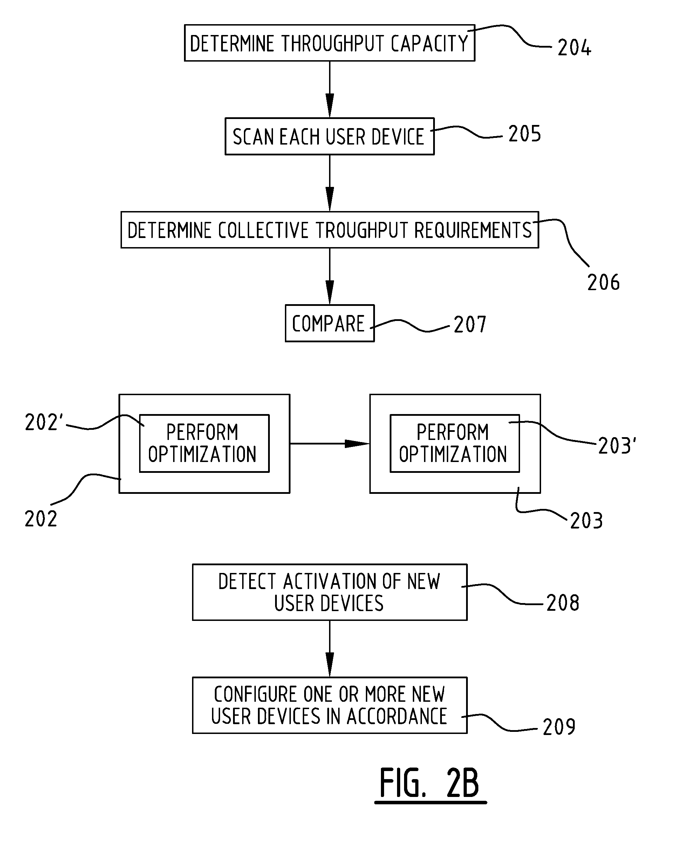

Figure 2B illustrates a second embodiment of the method according to the present invention. The method comprises all of the steps shown in figure 2A, which are not shown again in figure 2B, as well as one or more of the following sets of steps: 204-207; 202' and/or 203', and/or 208-209.

Steps 204-207 may be performed in order to determine whether or not throughput requirements posed on said multi-domain network by said service requests exceed a throughput capacity of said access network. An example order is illustrated here. Also, the steps 204-207 may for example be performed before step 201 of figure 2A.

Step 204 represents determining a throughput capacity for said multi-domain access network.

Step 205 represents scanning each of said user devices in order to determine its available interfaces, its maximum bandwidths corresponding to each of said available interfaces, its available services, and service requirements for each of said available services.

Step 206 represents determining collective throughput requirements of said service requests based on said scanned devices' available interfaces, maximum bandwidths, available services and service requirements.

Step 207 represents comparing said collective throughput requirements to said determined throughput capacity.

Steps 202' and 203' may be performed as specific ways to perform (part of) steps 202 and 203 respectively.

Step 202' represents performing an optimization process based on said plurality of service requests in order to determine 202 said service layer configuration parameter such that network resource use efficiency for said multi-domain access network is improved while taking into account each service request of said plurality of service requests.

Step 203' represents performing an optimization process based on said plurality of service requests in order to determine203 said access layer configuration parameter such that network resource use efficiency for said multi-domain access network is improved while taking into account each service request of said plurality of service requests.

Steps 208-209 may be performed to improve dynamic management of service requests when the HWN 20 is changed, for instance after performing step 202 and/or step 203 of figure 2A.

Step 208 represents detecting whether a new user device is activated in said HWN.

Step 209 represents, when it is detected in step 208 that a new user device is activated, configuring said new user device in accordance with configurations of said user devices so as to avoid interference between said new user device and said user devices. When activation of multiple new user devices is detected, the multiple new user devices may be configured accordingly.

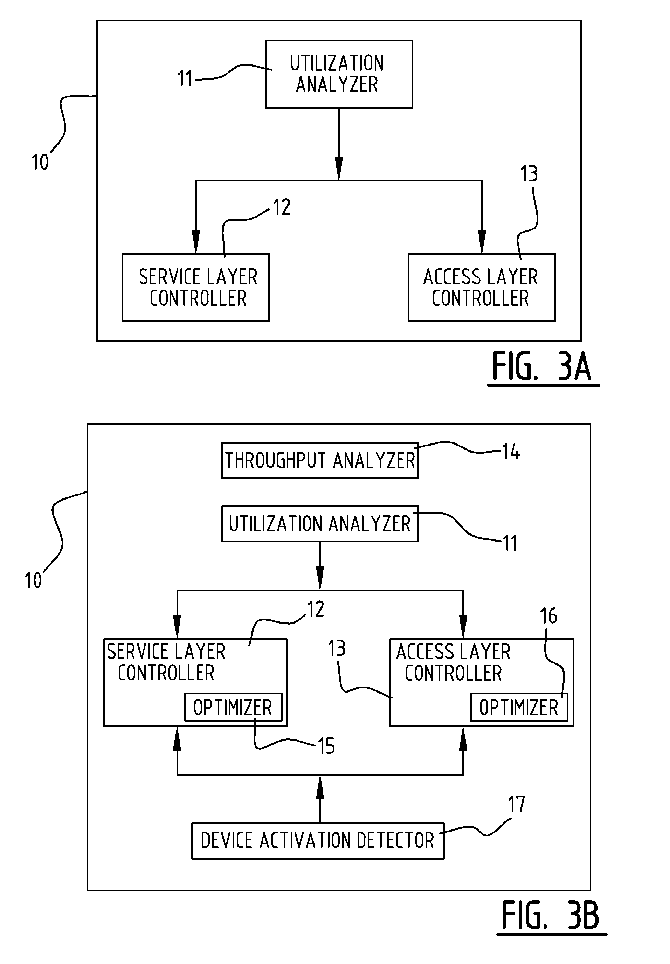

Figures 3A-B illustrate embodiments of the control apparatus 10 according to the present invention.

Figure 3A illustrates a first embodiment of the control apparatus 10 according to the present invention. The control apparatus 10 comprises: a utilization analyzer 11, as well as a service layer controller 12 and/or an access layer controller 13. The illustrated embodiment comprises both a service layer controller 12 and an access layer controller 13, but other embodiments may comprise a service layer controller 12 and no access layer controller 13, or an access layer controller 13 and no service layer controller 12.

The utilization analyzer 11 is configured for determining an network resource utilization for said multi-domain access network. The utilization analyzer 11 may obtain information about the utilization by analyzing the HWN and/or the multi-domain access network. It may have one or more outputs to output the network resource utilization to the service layer controller 12 and/or the access layer controller 13.

The service layer controller 12 is configured for determining a service layer configuration parameter for each of said service requests, based on said plurality of service requests and on said network resource utilization, and for configuring the service layer of said HWN according to said service layer configuration parameters for said plurality of service requests.

To this end, the service layer controller 12 may be provided with one or more inputs to receive the network resource utilization from the utilization analyzer 11.

The access layer controller 13 is configured for determining an access layer configuration parameter for each of said service requests, based on said plurality of service requests and on said network resource utilization, and for configuring the access layer of said HWN according to said access layer configuration parameters for said plurality of service requests.

To this end, the access layer controller 13 may be provided with one or more inputs to receive the network resource utilization from the utilization analyzer 11.

Figure 3B illustrates a second embodiment of the control apparatus 10 according to the present invention. The control apparatus 10 comprises: a utilization analyzer 11, and at least one of a service layer controller 12 and an access layer controller 13. These parts are structurally connected and function analogously to those described with reference to figure 3A. The control apparatus 10 shown in figure 3B further also comprises a throughput analyzer 14, a first optimizer 15, a second optimizer 16, and a device activation detector 17. Although these four additional optional parts 14, 15, 16 and 17 are shown together in this embodiment, it will be appreciated that other embodiments may have only one, two or three of the four additional optional parts 14, 15, 16 and 17.

The throughput analyzer 14 is configured to determine whether or not throughput requirements posed on the multi-domain network by the service requests exceed a throughput capacity of the access network. The throughput analyzer 14 may comprise (not shown) a throughput capacity calculator, a device scanner, a throughput requirements calculator and a comparator. The throughput capacity calculator is configured for determining a throughput capacity for said multi-domain access network, and has an output for outputting the throughput capacity to the comparator. The device scanner is configured for scanning each of said user devices in order to determine its available interfaces, its maximum bandwidths corresponding to each of said available interfaces, its available services, and service requirements for each of said available services, and has an output for outputting these to the throughput requirements calculator. The throughput requirements calculator is configured for determining collective throughput requirements of said service requests based on said scanned devices' available interfaces, maximum bandwidths, available services and service requirements. The throughput requirements calculator has an output for outputting the collective throughput requirements to the comparator. The comparator is configured for comparing said collective throughput requirements to said determined throughput capacity.

The first optimizer 15 is comprised by the service layer controller 12, and is configured for performing an optimization process based on said plurality of service requests in order to determine said service layer configuration parameter such that network resource use efficiency for said multi-domain access network is improved while taking into account each service request. The first optimizer 15 may comprise a comparator (not shown) such that the optimization process may take into account device characteristics across multiple devices.

The second optimizer 16 is comprised by the access layer controller 13, and is configured for performing an optimization process based on said plurality of service requests in order to determine said access layer configuration parameter such that network resource use efficiency for said multi-domain access network is improved while taking into account each service request. The second optimizer 16 may comprise a comparator (not shown) such that the optimization process may take into account device characteristics across multiple devices.

The device activation detector 17 is configured for detecting whether a new user device (or a plurality of new user devices) is activated in said HWN. Also, at least one of the service layer controller 11 and the access layer controller 13 is configured for, depending on the output of said device activation detector 17, configuring said new user device (or said new user devices) in accordance with configurations of said user devices so as to avoid interference between said new user device(s) and said user devices.

Optionally, the control apparatus 10 may also comprise a quality of service calculator (not shown). The quality of service calculator is configured for determining a quality of service parameter for each of said service requests, based on at least one of the following: a pre-determined range of service layer quality level settings for the corresponding service request; (preferably time-based) priority information about the corresponding service request; and access layer network resource requirements of the corresponding service request. The quality of service calculator may obtain some or all of these data from a memory storage (not shown) in the control apparatus 10 in which they have been stored, and/or it may obtain some or all of these data from the respective service requests, and/or it may obtain some or all of these data from another entity in or connected to the HWN. It may have one or more outputs to output the quality of service parameters to at least one of the service level controller 11 and the access layer controller 12.

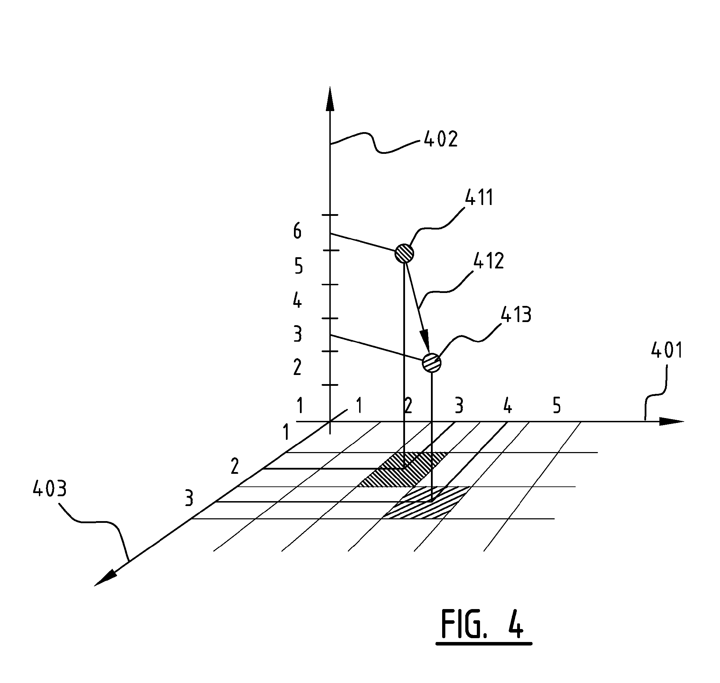

Figure 4 illustrates a graphical solution to an exemplary optimization problem. The present example involves a three-dimensional 401-403 problem and solution, but it will be understood that this is an especially convenient example representation, and that embodiments of the method and the control apparatus according to the present invention may involve less than three or more than three dimensions.

In the present example, axis 401 represents access domains (such as femto, macro, WiFi, ...); axis 402 represents service layer quality levels (such as such as video resolution levels, codec settings, ...); and axis 403 represents bandwidths. The access domains 401 and the bandwidths 403 are exemplary access layer configuration parameters; the service layer quality levels are an exemplary service layer configuration parameter. Other service layer configuration parameters and other access layer configuration parameters might include respectively resolution, data rate, etc. and access interfaces, etc.

In the figure, point 411 represents a first configuration in the three-dimensional solution space of the example optimization problem. The optimization may determine 412 another, second configuration represented by point 413 in the three-dimensional solution space, that is characterized by at least one different component from the components of the point 411. It will be appreciated that this optimization process may comprise multiple iterations of optimization, and may constitute an engineering trade-off between speed and optimality.

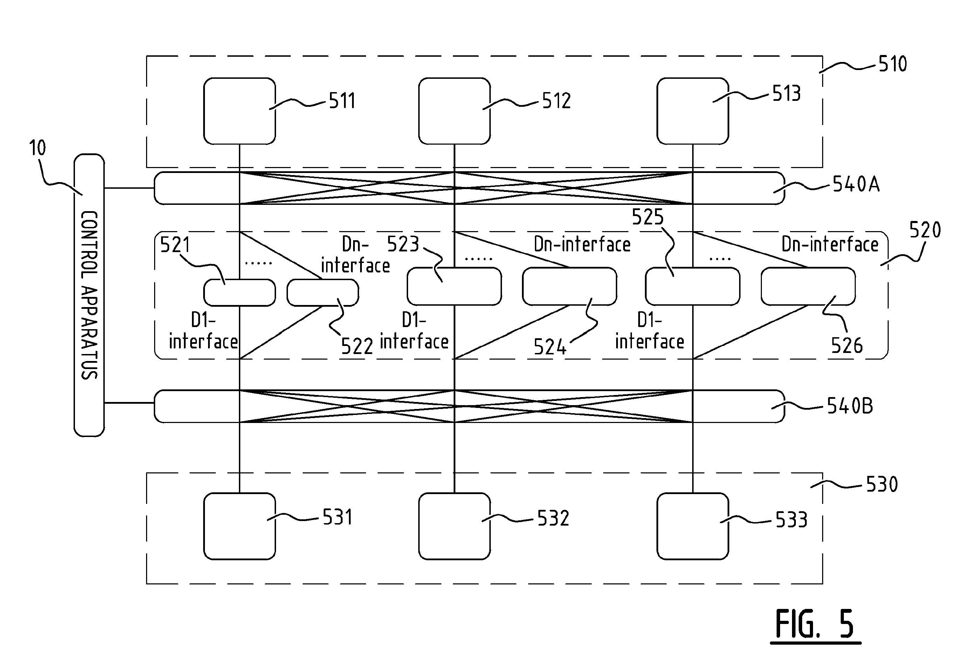

Figure 5 illustrates an example interface connection for a control apparatus 10 according to the present invention. The network is logically segmented in three layers or domains: the service domain 510, the device domain 520 and the network domain 530. The service domain 510 features three OTT services in this example: OTT 1 511, OTT 2 512 and OTT 3 513. These OTT services may be such services as an online video channel (YouTube), an online video chat (Skype), a home office service, etc. The device domain 520 features a number of interfaces 521-526, with an interface per device and per access domain. As an example, there are six interfaces illustrated: WiFi-1 521 and WiFi-N 522 for two devices and for the WiFi access domain, Femto-1 523 and Femto-N 524 for two devices and for the femto access domain, and Macro-1 525 and Macro-N 526 for two devices and for the macro access domain. The network domain 530 features three network operators in this example: NO 1 531, NO 2 532 and NO 3 533. There are also a service (or service layer) application programming interface 530 connecting the service domain 510 and the device domain 520, and a network (or access layer) application programming interface 540 connecting the device domain 520 and the network domain 530. Both application programming interfaces 530 and 540 are configured by the control apparatus 10.

A person of skill in the art would readily recognize that steps of various above-described methods can be performed by programmed computers. Herein, some embodiments are also intended to cover program storage devices, *e.g.* digital data storage media, which are machine or computer readable and encode machine-executable or computer-executable programs of instructions, wherein said instructions perform some or all of the steps of said above-described methods. The program storage devices may be, *e.g.* digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

Whilst the principles of the invention have been set out above in connection with specific embodiments, it is to be understood that this description is merely made by way of example and not as a limitation of the scope of protection which is determined by the appended claims.

**Claims**

1. A method for managing a plurality of over-the-top service requests from a number of user devices in a heterogeneous wireless network (known as HWN) connected to the Internet via a multi-domain access network representing an access layer;
   wherein each service request is associated with at least one of:

   - service layer quality level requirements; and
   - access layer network resource requirements;

   said method comprising:

   - determining a network resource utilization for said multi-domain access network; and

   said method comprising at least one of the following:

   - determining a service layer configuration parameter for each of said service requests, based on said plurality of service requests and on said network resource utilization; and configuring the service layer of said HWN according to said service layer configuration parameters for said plurality of service requests; and
   - determining an access layer configuration parameter for each of said service requests, based on said plurality of service requests and on said network resource utilization; and configuring the access layer of said HWN according to said access layer configuration parameters for said plurality of service requests.

2. The method of claim 1,
   wherein at least one of said service layer configuration parameter and said access layer configuration parameter is determined for each service request based on at least one of said service layer quality level requirements and said access layer network resource requirements of each service request of said plurality of service requests; and/or
   wherein at least one of said service layer configuration parameter and said access layer configuration parameter is determined for each service request based on at least one of the following:

   - a pre-determined range of service layer quality level settings for the service corresponding with the service request; and
   - priority information about at least one of the service and the device corresponding with the service request.

3. The method of any one of the previous claims,
   wherein said configuring of the service layer of said HWN comprises configuring each of said user devices via a service application programming interface to use service layer quality level settings according to its respective service layer configuration parameter; and/or
   wherein said configuring of the access layer of said HWN comprises configuring each of said user devices via a network application programming interface to use access layer network resource settings according to its respective access layer configuration parameter.

4. The method of any one of the previous claims, wherein at least one of said service layer configuration parameter and said access layer configuration parameter is determined by performing an optimization process based on said plurality of service requests in order to respectively determine said service layer configuration parameter and said access layer configuration parameter such that network resource use efficiency for said multi-domain access network is improved while taking into account each service request of said plurality of service requests.

5. The method of any one of the previous claims, comprising, in order to determine whether or not throughput requirements posed on said multi-domain access network by said service requests exceed a throughput capacity of said multi-domain access network:

   - determining a throughput capacity for said multi-domain access network;
   - scanning each of said user devices in order to determine its available interfaces, its maximum bandwidths corresponding to each of said available interfaces, its available services, and service requirements for each of said available services;
   - determining collective throughput requirements of said service requests based on said scanned devices' available interfaces, maximum bandwidths, available services and service requirements; and
   - comparing said collective throughput requirements to said determined throughput capacity.

6. The method of any one of the claims 3-5, wherein the optimization process is performed by comparing device settings across multiple devices using a comparator.

7. The method of any one of the previous claims, comprising:

   - detecting whether a new user device is activated in said HWN; and
   - when it is detected that a new user device is activated, configuring said new user device in accordance with configurations of said user devices so as to avoid interference between said new user device and said user devices.

8. A control apparatus for managing a plurality of over-the-top service requests from a number of user devices in a heterogeneous wireless network (known as HWN) connected to the Internet via a multi-domain access network representing an access layer;
   wherein each service request is associated with at least one of:

   - service layer quality level requirements; and
   - access layer network resource requirements;

   said control apparatus comprising:

   - a utilization analyzer configured for determining a network resource utilization for said multi-domain access network; and

   at least one of the following:

   - a service layer controller configured for:

     - determining a service layer configuration parameter for each of said service requests, based on said plurality of service requests and on said network resource utilization; and
     - configuring the service layer of said HWN according to said service layer configuration parameters for said plurality of service requests; and

   - an access layer controller configured for:

     - determining an access layer configuration parameter for each of said service requests, based on said plurality of service requests and on said network resource utilization; and
     - configuring the access layer of said HWN according to said access layer configuration parameters for said plurality of service requests.

**9.** The control apparatus of claim 8,
wherein at least one of said service layer controller and said access layer controller is configured for determining respectively said service layer configuration parameter and said access layer configuration parameter for each service request based on at least one of said service layer quality level requirements and said access layer network resource requirements of each service request of said plurality of service requests; and/or
wherein at least one of said service layer controller and said access layer controller is configured for determining respectively said service layer configuration parameter and said access layer configuration parameter for each service request based on at least one of the following:

- a pre-determined range of service layer quality level settings for the service corresponding with the service request; and
- priority information about at least one of the service and the device corresponding with the service request.

**10.** The control apparatus of any one of the claims 8-9,

- wherein said service layer controller is configured for configuring said service layer of said HWN by configuring each of said user devices via a service application programming interface to use service layer quality level settings according to its respective service layer configuration parameter; and/or
- wherein said access layer controller is configured for configuring said access layer of said HWN by configuring each of said user devices via a network application programming interface to use access layer network resource settings according to its respective access layer configuration parameter.

**11.** The control apparatus of any one of the claims 8-10, wherein at least one of said service layer controller and said access layer controller comprises an optimizer configured for performing an optimization process based on said plurality of service requests in order to respectively determine said service layer configuration parameter and said access layer configuration parameter such that network resource use efficiency for said multi-domain access network is improved while taking into account each service request of said plurality of service requests.

**12.** The control apparatus of any one of the claims 8-11, comprising a throughput analyzer configured to determine whether or not throughput requirements posed on said multi-domain access network by said service requests exceed a throughput capacity of said multi-domain access network; said throughput analyzer comprising:

- a throughput capacity calculator configured for determining a throughput capacity for said multi-domain access network;
- a device scanner configured for scanning each of said user devices in order to determine its available interfaces, its maximum bandwidths corresponding to each of said available interfaces, its available services, and service requirements for each of said available services;
- a throughput requirements calculator configured for determining collective throughput requirements of said service requests based on said scanned devices' available interfaces, maximum bandwidths, available services and service requirements; and
- a comparator configured for comparing said collective throughput requirements to said determined throughput capacity.

**13.** The control apparatus of any one of the claims 8-12, wherein said optimizer comprises a comparator configured for comparing device settings across multiple devices.

**14.** The control apparatus of any one of the claims 8-13, comprising a device activation detector configured for detecting whether a new user device is activated in said HWN; and
wherein at least one of said service layer controller and said access layer controller is configured for, depending on the output of said device activation detector, configuring said new user device in accordance with configurations of said user devices so as to avoid interference between said new user device and said user devices.

**15.** A computer program product comprising computer-executable instructions for performing a method when the program is run on a computer, the method comprising the steps of any one of the methods of any one of the claims 1-7.

**Amended claims in accordance with Rule 137(2) EPC.**

**1.** A method for managing a plurality of over-the-top service requests from a number of user devices in a heterogeneous wireless network (known as HWN, 20) connected to the Internet via a multi-domain access network representing an access layer;
wherein each service request is associated with at least one of:

- service layer quality level requirements; and
- access layer network resource requirements;

said method comprising:

- determining (201) a network resource utilization for said multi-domain access network; and

said method comprising at least one of the following:

- determining (202) a service layer configuration parameter for each of said service requests, based on said plurality of service requests and on said network resource utilization; and configuring the service layer of said HWN according to said service layer configuration parameters for said plurality of service requests; and
- determining (203) an access layer configuration parameter for each of said service requests, based on said plurality of service requests and on said network resource utilization; and configuring the access layer of said HWN according to said access layer configuration parameters for said plurality of service requests.

**2.** The method of claim 1,
wherein at least one of said service layer configuration parameter and said access layer configuration parameter is determined for each service request based on at least one of said service layer quality level requirements and said access layer network resource requirements of each service request of said plurality of service requests; and/or
wherein at least one of said service layer configuration parameter and said access layer configuration parameter is determined for each service request based on at least one of the following:

- a pre-determined range of service layer quality level settings for the service corresponding with the service request; and
- priority information about at least one of the service and the device corresponding with the service request.

**3.** The method of any one of the previous claims,
wherein said configuring of the service layer of said HWN comprises configuring each of said user devices via a service application programming interface to use service layer quality level settings according to its respective service layer configuration parameter; and/or
wherein said configuring of the access layer of said HWN comprises configuring each of said user devices via a network application programming interface to use access layer network resource settings according to its respective access layer configuration parameter.

**4.** The method of any one of the previous claims, wherein at least one of said service layer configuration parameter and said access layer configuration parameter is determined by performing (202', 203') an optimization process based on said plurality of service requests in order to respectively determine said service layer configuration parameter and said access layer configuration parameter such that network resource use efficiency for said multi-domain access network is improved while taking into account each service request of said plurality of service requests.

**5.** The method of any one of the previous claims, comprising, in order to determine whether or not throughput requirements posed on said multi-domain access network by said service requests exceed a throughput capacity of said multi-domain access network:

- determining (204) a throughput capacity for said multi-domain access network;
- scanning (205) each of said user devices in order to determine its available interfaces, its maximum bandwidths corresponding to each of said available interfaces, its available services, and service requirements for each of said available services;
- determining (206) collective throughput requirements of said service requests based on said scanned devices' available interfaces, maximum bandwidths, available services and service requirements; and

- comparing (207) said collective throughput requirements to said determined throughput capacity.

6. The method of any one of the claims 3-5, wherein the optimization process is performed by comparing device settings across multiple devices using a comparator.

7. The method of any one of the previous claims, comprising:

- detecting (208) whether a new user device is activated in said HWN; and
- when it is detected that a new user device is activated, configuring (209) said new user device in accordance with configurations of said user devices so as to avoid interference between said new user device and said user devices.

8. A control apparatus (10) for managing a plurality of over-the-top service requests from a number of user devices in a heterogeneous wireless network (known as HWN, 20) connected to the Internet via a multi-domain access network representing an access layer;
wherein each service request is associated with at least one of:

- service layer quality level requirements; and
- access layer network resource requirements;

said control apparatus comprising:

- a utilization analyzer (11) configured for determining a network resource utilization for said multi-domain access network; and

at least one of the following:

- a service layer controller (12) configured for:
- determining a service layer configuration parameter for each of said service requests, based on said plurality of service requests and on said network resource utilization; and
- configuring the service layer of said HWN according to said service layer configuration parameters for said plurality of service requests; and
- an access layer controller (13) configured for:
- determining an access layer configuration parameter for each of said service requests, based on said plurality of service requests and on said network resource utilization; and
- configuring the access layer of said HWN according to said access layer configuration parameters for said plurality of service requests.

9. The control apparatus of claim 8,
wherein at least one of said service layer controller and said access layer controller is configured for determining respectively said service layer configuration parameter and said access layer configuration parameter for each service request based on at least one of said service layer quality level requirements and said access layer network resource requirements of each service request of said plurality of service requests; and/or
wherein at least one of said service layer controller and said access layer controller is configured for determining respectively said service layer configuration parameter and said access layer configuration parameter for each service request based on at least one of the following:

- a pre-determined range of service layer quality level settings for the service corresponding with the service request; and
- priority information about at least one of the service and the device corresponding with the service request.

10. The control apparatus of any one of the claims 8-9,

- wherein said service layer controller is configured for configuring said service layer of said HWN by configuring each of said user devices via a service application programming interface to use service layer quality level settings according to its respective service layer configuration parameter; and/or
- wherein said access layer controller is configured for configuring said access layer of said HWN by configuring each of said user devices via a network application programming interface to use access layer network resource settings according to its respective access layer configuration parameter.

11. The control apparatus of any one of the claims 8-10, wherein at least one of said service layer controller and said access layer controller comprises an optimizer (15, 16) configured for performing an optimization process based on said plurality of service requests in order to respectively determine said service layer configuration parameter and said access layer configuration parameter such that network resource use efficiency for said multi-domain access network is improved while taking into account each service request of said plurality of service requests.

12. The control apparatus of any one of the claims 8-11, comprising a throughput analyzer (14) configured to determine whether or not throughput requirements posed on said multi-domain access network by said service requests exceed a throughput capacity of said multi-domain access network; said throughput analyzer comprising:

- a throughput capacity calculator configured for determining a throughput capacity for said multi-domain access network;
- a device scanner configured for scanning each of said user devices in order to determine its available interfaces, its maximum bandwidths corresponding to each of said available interfaces, its available services, and service requirements for each of said available services;
- a throughput requirements calculator configured for determining collective throughput requirements of said service requests based on said scanned devices' available interfaces, maximum bandwidths, available services and service requirements; and
- a comparator configured for comparing said collective throughput requirements to said determined throughput capacity.

13. The control apparatus of any one of the claims 8-12, wherein said optimizer comprises a comparator configured for comparing device settings across multiple devices.

14. The control apparatus of any one of the claims 8-13, comprising a device activation detector (17) configured for detecting whether a new user device is activated in said HWN; and
wherein at least one of said service layer controller and said access layer controller is configured for, depending on the output of said device activation detector, configuring said new user device in accordance with configurations of said user devices so as to avoid interference between said new user device and said user devices.

15. A computer program product comprising computer-executable instructions for performing a method when the program is run on a computer, the method comprising the steps of any one of the methods of any one of the claims 1-7.

**FIG. 1A**

Femto
100 Mbps

WiFi
200 Mbps

GW

GW

20
22
23

Macro
50 Mbps

GW

Server

PC

iPad

Devices

TV

Laptop

HDTV

Gaming

31

32

21

30

Access

50

42

41

10

CONTROL APPARATUS

Network
operator

60

OTT Services:
Youtube, Home Office,
Skype, Entertainment

40

FIG. 1B

**FIG. 1C**

EP 3 032 875 A1

EP 3 032 875 A1

**FIG. 1D**

DETERMINE NETWORK
RESOURCE UTILIZATION — 201

202

DETERMINE SERVICE LAYER
CONFIGURATION PARAMETER
AND CONFIGURE SERVICE LAYER

203

DETERMINE ACCESS LAYER
CONFIGURATION PARAMETER
AND CONFIGURE ACCESS LAYER

FIG. 2A

DETERMINE THROUGHPUT CAPACITY ——204

SCAN EACH USER DEVICE ——205

DETERMINE COLLECTIVE TROUGHPUT REQUIREMENTS ——206

COMPARE ——207

202' PERFORM OPTIMIZATION ——— PERFORM OPTIMIZATION ——203'

202 203

DETECT ACTIVATION OF NEW USER DEVICES ——208

CONFIGURE ONE OR MORE NEW USER DEVICES IN ACCORDANCE ——209

## FIG. 2B

UTILIZATION
ANALYZER

11

SERVICE LAYER
CONTROLLER

12

ACCESS LAYER
CONTROLLER

13

10

FIG. 3A

THROUGHPUT ANALYZER

14

UTILIZATION ANALYZER

11

SERVICE LAYER
CONTROLLER

OPTIMIZER

12

ACCESS LAYER
CONTROLLER

OPTIMIZER

16

13

15

10

DEVICE ACTIVATION DETECTOR

17

FIG. 3B

EP 3 032 875 A1

FIG. 4

FIG. 5

EP 3 032 875 A1

Europäisches
Patentamt
European
Patent Office
Office européen
des brevets

# EUROPEAN SEARCH REPORT

**Application Number**

EP 14 30 6970

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 101 640 908 A (UNIV BEIJING POSTS & TELECOMM) 3 February 2010 (2010-02-03) * the whole document * ----- | 1-15 | INV. H04W28/18 |
| X | CN 104 185 248 A (SHANGHAI INTERNET OF THINGS CO LTD; SHANGHAI RES CT WIRELESS COMM) 3 December 2014 (2014-12-03) * the whole document * ----- | 1-15 | |
| A | CARLOS QUADROS ET AL: "A mobile QoE Architecture for Heterogeneous Multimedia Wireless Networks", 2012 IEEE GLOBECOM WORKSHOPS (GC WKSHPS 2012) : ANAHEIM, CALIFORNIA, USA, 3 - 7 DECEMBER 2012, IEEE, PISCATAWAY, NJ, 3 December 2012 (2012-12-03), pages 1057-1061, XP032341524, DOI: 10.1109/GLOCOMW.2012.6477724 ISBN: 978-1-4673-4942-0 * abstract * * page 1058, left-hand column, line 3 - page 1058, right-hand column, line 13 * * page 1059, right-hand column, paragraph third - page 1060, left-hand column, paragraph third * ----- | 1-15 | |

**TECHNICAL FIELDS SEARCHED (IPC)**

H04W

The present search report has been drawn up for all claims

| Place of search | Date of completion of the search | Examiner |
|---|---|---|
| The Hague | 30 June 2015 | Brezmes Alonso, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 14 30 6970

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2015

| Patent document cited in search report | | Publication date | Patent family member(s) | Publication date |
|---|---|---|---|---|
| CN 101640908 | A | 03-02-2010 | NONE | |
| CN 104185248 | A | 03-12-2014 | NONE | |

EPO FORM P0459

For more details about this annex : see Official Journal of the European Patent Office, No. 12/82